# EUROPEAN PATENT APPLICATION

(11) **EP 1 832 622 A2**
(43) Date of publication of application: **12.09.2007**
(21) Application number: 07250872.4
(22) Date of filing: 01.03.2007
(51) Int. Cl.: C08J 3/20, C08K 3/24, C02F 1/42

(54) **Method for producing an arsenic-selective resin**

(30) Priority: 03.03.2006 US 779118 P
(71) Applicant: Rohm and Haas Company, Philadelphia, PA 19106-2399 (US)
(72) Inventor: Trejo, Jose Antonio, Lansdale Pennsylvania 19446 (US)
(74) Representative: Buckley, Guy Julian

(57) **Abstract**

A method for producing a resin loaded with a hydrous oxide of an amphoteric metal ion. The resin is combined with at least two bed volumes of an aqueous solution containing a salt of the amphoteric metal ion, and having a metal ion concentration of at least 5%, and then treated with an aqueous alkali metal hydroxide solution.

## Description

This invention relates to a method for producing a resin useful for removal of arsenic from water which contains arsenic.

Arsenic is present in water primarily in the form of arsenate or arsenite, each of which is extremely toxic. There are numerous reports of resins used to treat water to remove various arsenic-containing ions, including resins which are loaded with metals. For example, removal of arsenic-containing ions using an anion exchange resin loaded with precipitated Fe(III) is reported in U.S. Pub. No. 2005/0205495. However, the present application discloses an improved process for preparing such a resin.

The problem addressed by this invention is to provide an improved process for preparing a metal-loaded resin for use in removing arsenic from water.

### STATEMENT OF THE INVENTION

The present invention is directed to a process for producing a resin loaded with a hydrous oxide of an amphoteric metal ion; said process comprising steps of: (a) combining the resin with at least two bed volumes of an aqueous solution containing a salt of said amphoteric metal ion, and having a metal ion concentration of at least 8%; (b) draining excess liquid from the resin; (c) adding at least 0.3 bed volumes of an aqueous alkali metal hydroxide solution having an alkali metal hydroxide concentration of at least 3%, while monitoring pH, at a rate sufficient to raise liquid-phase pH above 4 within 20 minutes; (d) adding additional aqueous alkali metal hydroxide solution to maintain liquid-phase pH between 4 and 12; and
(e) draining excess liquid from the resin.

The invention is further directed to a resin comprising 10% to 35% of an amphoteric metal ion which is present as a hydrous oxide; wherein at least 50% of said metal ion is located in an outer half of a resin bead volume.

### DETAILED DESCRIPTION OF THE INVENTION

Percentages are weight percentages, unless specified otherwise. As used herein the term "(meth)acrylic" refers to acrylic or methacrylic. The term "excess liquid" refers to the amount of a liquid phase in a reactor or column that is drained easily via gravity in less than an hour. The term "bed volume" (BV) refers to a volume of liquid equal to the volume of a batch of resin beads in a container, e.g., a reactor or column. The term "styrene polymer" indicates a copolymer polymerized from monomers comprising styrene and/or at least one crosslinker, wherein the combined weight of styrene and crosslinkers is at least 50 weight percent of the total monomer weight. A crosslinker is a monomer containing at least two polymerizable carbon-carbon double bonds, including, e.g., divinylaromatic compounds, di- and tri-(meth)acrylate compounds and divinyl ether compounds. On preferred crosslinker is a divinylaromatic crosslinker, e.g., divinylbenzene. In one embodiment, a styrene polymer is made from a mixture of monomers that is at least 75% styrene and divinylaromatic crosslinkers, more preferably at least 90% styrene and divinylaromatic crosslinkers, and most preferably from a mixture of monomers that consists essentially of styrene and at least one divinylaromatic crosslinker. In another embodiment, a styrene polymer is made from a monomer mixture consisting essentially of at least one divinylaromatic crosslinker. The term "acrylic polymer" indicates a copolymer formed from a mixture of vinyl monomers containing at least one (meth)acrylic acid or ester, along with at least one crosslinker, wherein the combined weight of the (meth)acrylic acid(s) or ester(s) and the crosslinker(s) is at least 50 weight percent of the total monomer weight; preferably at least 75%, more preferably at least 90%, and most preferably from a mixture of monomers that consists essentially of at least one (meth)acrylic acid or ester and at least one crosslinker.

The term "gel" or "gellular" resin applies to a resin which was synthesized from a very low porosity (0 to 0.1 cm³/g), small average pore size (0 to 17 Å) and low B.E.T. surface area (0 to 10 m²/g) copolymer. The term "macroreticular" (or MR) resin is applied to a resin which is synthesized from a high mesoporous copolymer with higher surface area than the gel resins. The total porosity of the MR resins is between 0.1 and 0.7 cm³/g, average pore size between 17 and 500 Å and B.E.T. surface area between 10 and 200 m²/g. The term "cation exchange resin" indicates a resin which is capable of exchanging positively charged species with the environment. They comprise negatively charged species which are linked to cations such as Na⁺, K⁺, Ca⁺⁺, Mg⁺⁺, Fe⁺⁺⁺ or H⁺. The most common negatively charged species are carboxylic, sulfonic and phosphonic acid groups. The term "anion exchange resin" indicates a resin which is capable of exchanging negatively charged species with the environment. The term "strong base anion exchange resin" refers to an anion exchange resin that comprises positively charged species which are linked to anions such as Cl⁻, Br⁻, F⁻ and OH. The most common positively charged species are quaternary amines and protonated secondary amines.

The resin of this invention is in the form of beads. Preferably, the harmonic mean size (diameter) of the beads is from 100 µm to 1000 µm, alternatively from 250 µm to 800 µm, alternatively from 300 µm to 700 µm.

The term "hydrous oxide" indicates very insoluble compounds in water which are formed from the precipitation of a metal cation with a pH increase in the original solution. The hydrous oxide may be essentially oxides or hydroxides of a single metal or of a mixture of two or more metals. The charge on a hydrous oxide species depends largely upon the degree of acidity of the oxide and the media. They can exist as negatively, neutral or positively charged species. Variations in precipitation conditions for metal ions result in different structures that can be relatively more or less reactive towards arsenic ions in water. The structure of the metallic hydrous oxides can be amorphous or crystalline. The preferred metals are iron, aluminum, lanthanum, titanium, zirconium, zinc and manganese. Fe(III) is an especially preferred metal ion.

An example of the behavior of metal hydroxides at different pH values is that Fe(III) is totally soluble at low pH (less than 1.5) in water at ambient temperature. At high pH and high caustic concentration, another soluble structure is obtained, namely Fe(OH)₄⁻. The precipitation of Fe(III) starts at a pH of 2-3, depending on the presence of chelating agents and the experimental conditions. The complex stability of Fe(III)Lₓ (L is a ligand) might affect the precipitation pH value. Inside the pH range for precipitation, Fe(III) forms Fe(O)ₓ(OH)_{y} (oxy hydroxides) and/or Fe(OH)₃ (hydroxide). The structure of the precipitated compound among many others might be: Goethite, Akaganeite, Lepidocrocite or Schwertmannite. The temperature at which precipitation occurs also affects the microstructure obtained during the precipitation. Preferably, precipitation is done near ambient temperature, i.e., ca. 20°C to 35°C.

In one embodiment of the invention, the ion exchange resin has at least one substituent selected from hydroxy, ether, amine, quaternary amine, amine oxide and hydroxy amine. In one embodiment of the invention, the resin is a metal-chelating resin which has a chelating substituent selected from phosphonic acids, sulfonic acids, polyethyleneimines, polyamines, hydroxy amines, carboxylic acids, aminocarboxylic acids and aminoalkylphosphonates. Preferred aminocarboxylic substituents include, for example, substituents derived from nitrilotriacetic acid, ethylenediamine tetraacetic acid (EDTA), diethylenetriamine pentaacetic acid, tris(carboxymethyl)amine, iminodiacetic acid, N-(carbamoylmethyl)iminodiacetic acid, N,N-bis(carboxymethyl)-β-alanine and N-(phosphonomethyl)iminodiacetic acid.

Preferably, the level of metal(s) contained in the resin based on the dry weight of the resin is at least 12%, alternatively at least 15%. Preferably the level of metal compound is no more than 30%, alternatively no more than 28%, alternatively no more than 25%. In one embodiment of the invention, the resin is a macroreticular or macroporous resin. In one embodiment of this invention, the base resin for metal loading is an acrylic resin or a styrenic resin, i.e., a resin which is an acrylic polymer or a styrene polymer. In one embodiment of the invention, the resin is an ion exchange resin.

In the method of this invention, the resin is combined with at least two bed volumes of an aqueous solution containing a salt of said amphoteric metal ion, and having a metal ion concentration of at least 8%. The aqueous solution may be added to a resin bed contained in a column, or to resin contained in a reactor, in which case preferably the contents are mixed. The aqueous solution can be combined with the resin in one large portion, or in separate portions, with excess liquid drained from the resin beads between portions. Preferably, in the draining steps in the present method, the excess liquid is drained substantially completely, but to facilitate production of resin, the reactor or column may be drained quickly, leaving as much as 30% of the excess liquid behind. In one embodiment of the invention, liquid is allowed to drain for at least 3 hours, alternatively at least 6 hours, alternatively at least 12 hours, alternatively at least 18 hours. In some embodiments of the invention, as much as six or more bed volumes of aqueous solution may be used, and the solution may be added in six or more portions. In one embodiment of the invention, two to three portions of an aqueous solution containing a salt of said amphoteric metal ion are combined with the resin beads, each portion followed by another draining step.

Preferably, the amount of aqueous solution combined with the resin is at least 0.5 bed volumes, alternatively at least 1 BV, alternatively at least 1.5 BV; preferably the amount of aqueous solution is no greater than 5 BV, alternatively no greater than 4 BV, alternatively no greater than 3 BV. Preferably, the concentration of the amphoteric metal ion in the aqueous solution is at least 9%, alternatively at least 10%, alternatively at least 11%; preferably the concentration is no greater than 30%, alternatively no greater than 25%, alternatively no greater than 20%, alternatively no greater than 15%.

In one embodiment, additional portions having a higher concentration of amphoteric metal ion are added and drained, up to six or more total portions. In one embodiment, one, two or three additional portions are added. Preferably, when a higher concentration of amphoteric metal ion is to be added, the concentration of the amphoteric metal ion in the aqueous solution is at least 10%, alternatively at least 12%; preferably the concentration is no greater than 30%, alternatively no greater than 20%, alternatively no greater than 16%.

In one embodiment, when portions of aqueous metal ion are added, the excess liquid is drained until at least 85% of the metal ion added in the previous portion of aqueous metal ion is recovered in the excess liquid drained from the beads, alternatively at least 90%, alternatively at least 95%.

At least 0.3 bed volumes of an aqueous alkali metal hydroxide solution is combined with the drained resin after the metal ion treatment(s) are complete (step (c)). In one embodiment of the invention, at least 0.4 bed volumes are used, alternatively at least 0.5; in this embodiment, no more than 2 bed volumes are used, alternatively no more than 1 bed volume. In one embodiment, the concentration of the alkali metal hydroxide solution is at least 3%, alternatively at least 5%, alternatively at least 7%; in this embodiment the concentration is no greater than 50%, alternatively no greater than 30%, alternatively no greater than 25%, alternatively no greater than 20%, alternatively no greater than 15%. The amount, concentration and rate of addition of the alkali metal hydroxide solution are chosen to raise the pH to greater than 4 within 20 minutes of commencing addition. In one embodiment, the alkali metal hydroxide solution is added so as to raise the pH to greater than 4 within 15 minutes. Preferably, the pH is from 5.5 to 8.5 after addition of the alkali metal hydroxide solution. The amount of alkali metal hydroxide in the alkali metal hydroxide solution preferably is from 0.12 g/g dry resin to 0.75 g/g dry resin, alternatively from 0.37 g/g dry resin to 0.6 g/g dry resin.

Additional aqueous alkali metal hydroxide solution is added in an amount sufficient to maintain liquid-phase pH between 4 and 12 (step (d)). The additional hydroxide is added gradually while monitoring pH in an amount and at a rate sufficient to maintain the pH in the target range. Typically, the amount of hydroxide needed is from 0.1 bed volume of resin to 3 bed volumes of resin. In one embodiment of the invention, after the pH is stable in the target range, an aqueous carbonate or bicarbonate salt is added to the mixture of resin and liquid phase, e.g., aqueous NaHCO₃. Preferably, the amount of carbonate or bicarbonate is from 0.12 g/g dry resin to 0.75 g/g dry resin, alternatively from 0.3 g/g dry resin to 0.6 g/g dry resin. Preferably, the concentration of bicarbonate in the aqueous solution is from 1% to 25%, alternatively from 5% to 10%. In another embodiment of the invention, after adding additional aqueous alkali metal hydroxide solution to maintain liquid-phase pH between 4 and 12, the amount of alkali metal hydroxide introduced into the mixture is further adjusted to maintain a liquid-phase pH between 5 and 8.5.

In one embodiment, the ion exchange resin is an acrylic resin functionalized with the functional group shown below:

RR¹N{(CH₂)ₓN(R²)},(CH₂)_{y}NR³R⁴

where R denotes the resin, to which the amine nitrogen on the far left is attached via an amide bond with an acrylic carbonyl group or via a C-N bond to a CH₂ group on the acrylic resin; R¹ and R²=H, Me or Et; x and y =1-4, z = 0-2 and R³ and R⁴ = Me, Et, Pr or Bu. A more preferred functionalization would have R attached via an amide bond; R¹=H or Me; z = 0 ; y = 1-4 and R³ and R⁴ = Me or Et. The most preferred embodiment would have R¹=H; y = 3 and R³ and R⁴ = Me. The amine functional group can be introduced by reacting a diamine which is methylated on one end, e.g., 3-dimethylaminopropylamine (DMAPA) with the acrylic resin at high temperature (170-189°C), under nitrogen pressure between 35-60 psig (241-413 kPa) for 8-24 hours.

In one embodiment, the acrylic resin is a gel constructed from a copolymer of methyl acrylate/divinylbenzene (DVB) with 2-5% DVB and 0-1.0% diethylene glycol divinyl ether as crosslinker. A more preferred embodiment would have 3-4% DVB and 0.45-0.55% diethylene glycol divinyl ether, with the most preferred being about 3.6% DVB and about 0.49% diethylene glycol divinyl ether. Another embodiment of this invention would use as a base resin for metal loading a macroreticular resin constructed from a copolymer of methyl acrylate/DVB made with 6-9% DVB and 1.1-3.0% diethylene glycol divinyl ether as crosslinker. A more preferred embodiment would have 7-8% DVB and 1.5-2.5% diethylene glycol divinyl ether, with the most preferred being about 7.6% DVB and about 2.0% diethylene glycol divinyl ether.

In one embodiment of the invention, the resin is a mono-dispersed resin, i.e., one having a uniformity coefficient from 1.0 to 1.3, more preferably from 1.0 to 1.05. The uniformity coefficient is the mesh size of the screen on which about 40% of the resin is retained divided by the mesh size of the screen on which about 90% of the resin is retained. In one embodiment, the mono-dispersed resin is a jetted resin, see, e.g., U.S. Pat. No. 3,922,255. In one embodiment of the invention, the resin is a seed-expanded resin, see, e.g., U.S. Pat. No. 5,147,937.

In one embodiment of the invention, water to be treated is surface or ground water containing at least 10 ppm of sulfate ion and from 10 ppb to 10 ppm of arsenic compounds, alternatively from 10 ppb to 800 ppb, alternatively from 10 to 400 ppb. The pH of the water preferably is in the range from 4 to 10, alternatively from 6 to 9 for ground water and from 5 to 9 for surface water. In another embodiment of the invention, water to be treated has arsenic levels as described above, but is low in sulfate. Such water is derived either from natural low-sulfate sources, or from water which has been pre-treated to reduce sulfate levels prior to contact with the arsenic-selective resins used in the present invention. Low levels of sulfate are considered to be from 0-250 ppm, medium levels are 250-1000 ppm and high levels are higher than 1000 ppm.

In addition to removing arsenic-containing ions, e.g., arsenate and arsenate from water, it is believed that the resins of the present invention remove other common contaminants from water, e.g., ions containing Cd, Zn, Cu, Cr, Hg, Pb, Ni, Co, Mo, W, V, Ag, U, Sb and Se, as well as F, humic acids, fulvic acid, phosphates, silicates, perchlorate and borates.

The resin of this invention comprises 10% to 35% of an amphoteric metal ion which is present as a hydrous oxide; wherein at least 50% of said metal ion is located in an outer half of the resin bead volume. In one embodiment of the invention, at least 55% of said metal ion is located in the outer half of the resin bead volume, alternatively at least 58%. In one embodiment, at least 25% of the metal ion is located in the outer 20 µm of the bead, i.e., in a shell with a thickness of 20 µm which is located on the outer surface of the bead, alternatively at least 28%.

### EXAMPLES

### Example 1: Iron Loading of an Acrylic Weak Base Gel Ion Exchange Resin

4000 liters of resin (Amberlite^{™} IRA67- weak base acrylic anion exchange resin with 3-dimethylaminopropyl (DMAPA) groups attached via an amide linkage) was charged to the reactor. Excess water was drained from the reactor (1 hour). Aqueous ferric sulfate (4000 liters, 40% w/w) was added and the contents agitated for 2 hours. The ferric sulfate solution was drained (1 hour). A second charge of ferric sulfate (4000 liters, 40% w/w) was added and the contents agitated for 2 hours, then drained overnight to achieve at least 90% of recovery of the charged volume of ferric solution. The pH of the ferric solution drained should be between 0.8 - 2.5. 7200 liters of aqueous NaOH solution (8% w/w) was charged in 15 minutes. After completion of the addition, pH of the liquid phase in the reactor was maintained between 4.5 and 10 in the first 40 minutes, between 5 and 8 at 40-80 minutes and between 5.0 and 7.5 at 80-120 minutes. To keep the pH in these ranges, 1125 liters of 8% NaOH were used within 15-80 minutes of this step. The final pH was between 5 and 7.5. The liquid was drained (1 hour), and then 4000 liters of NaHCO₃ (8%) were charged to the reactor as fast as possible, and agitated for 2 hours. The pH was between 7 and 8.2. The liquid was drained from the reactor (45 minutes), and then 6000 liters of water were charged with no agitation. The lot was then agitated for 30 minutes and then the reactor was drained. The resin was washed with excess water to remove particles and clean the resin. The resin contained 15% Fe on a dry basis. The final resin beads had a harmonic mean size of 625 µm.

### Example 2: Iron Loading of an Acrylic Weak Base Gel Ion Exchange Resin

30 g of IRA67 resin were charged to the reactor, and excess water was drained. Aqueous ferric sulfate (12%, 84 mL) was charged to the reactor and agitated for 2 hours, then drained. The ferric sulfate addition cycle was repeated twice more. Aqueous ferric sulfate (13%, 84 mL) was charged to the reactor, agitated for 2 hours, then drained. This second ferric sulfate addition cycle also was repeated twice more. Aqueous NaOH (8%) was added within 2 minutes. The contents were agitated and the pH monitored after the caustic addition; the pH was 6.18 at the end (60 minutes after the NaOH addition). The reactor was drained, and aqueous NaHCO₃ (8%, 84 mL) was added and agitated for 2 hours. The final pH was 6.8. The reactor was drained and the resin washed with 2 liters of water until effluent was clear. This process gave 20% Fe in the resin on a dry basis.

### Example 3: Iron Loading of an Acrylic Weak Base Gel Ion Exchange Resin

357 g of Amberlite^{™} IRA67 resin were charged to the reactor, and excess water was drained. Aqueous ferric sulfate (12% Fe content, 1000 mL) was charged to the reactor and agitated for 2 hours, then siphoned for 8 minutes. 750 ml. of aqueous NaOH (8%) was added for 20 minutes at 37 ml/min. In the first 6.5 minutes, no agitation was used. After 6.5 minutes the agitation was started. The pH at 5.5 minutes was 1.77, and 8.99 at 29 minutes. The final pH was 6.6 at 120 minutes. The solution was siphoned and 500 ml of NaHCO₃ 8% solution was added over 38 minutes. The final pH was 7.4. Excess water was used to wash the material until the effluent was clear. %-Fe in this material was 13.

### Comparative Example 1: Iron Loading of an Acrylic Weak Base Gel Ion Exchange Resin

4000 liters of resin (Amberlite^{™} IRA67- weak base acrylic anion exchange resin with 3-dimethylaminopropyl (DMAPA) groups attached via an amide linkage) was charged to the reactor. Excess water was drained from the reactor (1 hour). Aqueous ferric sulfate (4000 liters, 40% w/w) was added and the contents agitated for 2 hours. The ferric sulfate solution was drained (1 hour). A second charge of ferric sulfate (4000 liters, 40% w/w) was added and the contents agitated for 2 hours, then drained to achieve at least 90% of recovery of the charged volume of ferric solution. The resin was washed with 80000 liters of water at a flow rate of 8000 liters per hour. The final pH of the effluent was above 2.5. The liquid was drained (1 hour), and then 8000 liters of NaHCO₃ were charged to the reactor as fast as possible, and agitated for 2 hours. The pH was between 6.5 and 7.8. The liquid was drained from the reactor (45 minutes), and then 6000 liters of water were charged with no agitation. The resin was washed with excess water. At the end of the washing step the effluent water from the reactor was clear. The resin contained 5% Fe on a dry basis.

### Comparative Example 2: Iron Loading of an Acrylic Weak Base Gel Ion Exchange Resin

42 ml of resin (Amberlite^{™} IRA67- weak base acrylic anion exchange resin with 3-dimethylaminopropyl (DMAPA) groups attached via an amide linkage) was charged to the reactor. Excess water was drained from the reactor (1 hour). Aqueous ferric sulfate (42 ml, 40% w/w) was added and the contents agitated for 2 hours. The ferric sulfate solution was drained (1 hour). 16 ml of water were charged in 13 minutes. The lot was agitated for 3 minutes and let sit for 30 minutes with no agitation. The liquid was then siphoned for 5 minutes. 42 ml of 10% NaOH solution was added in 31 minutes. The pH was 2.28 after 8 minutes during the addition time. The pH was kept between 3.1-8.99 between 31-64 minutes in the neutralization step. A total of 1.5 BV (63 ml) were used in the neutralization step. At the end of 120 minutes the pH was 4.52 and pH 4.17 after 240 minutes. The liquid was siphoned out. 42 ml of a 8% NaHCO₃ solution were charged as fast as possible to the reactor. The lot was agitated for 2 hours, siphoned and washed with excess water. The %-Fe on a dry basis of the resin was 9 %.

### Comparative Example 3:

42 ml of resin (Amberlite^{™} IRA67- weak base acrylic anion exchange resin with 3-dimethylaminopropyl (DMAPA) groups attached via an amide linkage) was charged to the reactor. Excess water was drained from the reactor (1 hour). Aqueous ferric sulfate (42 ml, 40% w/w) was added and the contents agitated for 3 hours. The ferric sulfate solution was drained (1 hour). 800 ml of water were used to wash the resin by plug flow process. The liquid was siphoned for 2 minutes. 84 ml of NaHCO₃ 8% solution were used to neutralize the material. The final pH after the carbonate was 7.5. 800 ml of water were used to wash the resin. The %-Fe on a dry basis of the resin was 10 %.

Results of resin capacity for arsenic removal obtained from column testing are presented in Table 1 below. The second column shows the number of bed volumes of water that had passed through the column when the arsenic concentration in the column effluent exceeded 10 ppb. Influent Arsenic concentration was 100 ppb and pH 7.6. The flow rate was 37.5 BV/hr, and the linear velocity was 1.5 gallons per minute per square ft. The last column shows the amount of arsenic absorbed by the column up to the point where arsenic concentration in the effluent exceeded 10 ppb. The As was measured by ICP-MS.

**Table 1**

| Example | Bed Volumes to 10 ppb of As effluent. (ICP-MS) | %-Fe in resin -dry basis (ICP) | Arsenic capacity (mg As/mL resin) |
|---|---|---|---|
| Ex. 1 | 7056 | 15 | 5.64 |
| Ex. 3 | 5500 | 13 | 4.40 |
| Comp. Ex. 1 | 1000 | 5 | 0.80 |
| Comp. Ex. 2 | 4050 | 8 | 3.24 |
| Comp. Ex. 3 | 1800 | 10 | 1.44 |

Resin beads were analyzed by scanning electron microscopy (SEM) and energy dispersive spectroscopy (EDS). The location of iron was determined both by iron/carbon peak ratios (Fe/C) and iron/background peak ratios (Fe/bk.) as a function of outer or inner half of bead volume and distance in microns from the bead surface, and also was predicted as a function of distance based on uniform iron distribution. The results are presented below in Table 2.

**Table 2**

| | Example 1 | | Comp. Example 1 | | |
|---|---|---|---|---|---|
| | %Fe from Fe/C | %Fe from Fe/bk. | %Fe from Fe/C | %Fe from Fe/bk. | predicted |
| outer half | 61% | 61% | 41% | 31% | 50% |
| inner half | 39% | 39% | 59% | 69% | 50% |
| | | | | | |
| 0-20 µm | 32% | 32% | 21% | 13% | 26% |
| 20-40 µm | 22% | 24% | 20% | 19% | 21% |
| 40-60 µm | 15% | 15% | 18% | 19% | 16% |
| 60 µm - center | 30% | 29% | 42% | 49% | 37% |
| | | | | | |
| 0-40 µm | 56% | 55% | 41% | 32% | 46% |
| 40 µm - center | 44% | 45% | 59% | 68% | 54% |

Resin beads were examined by microscopy and determined to contain hydrous iron oxide crystals in the Goethite form with an average length of about 50 nm and an average diameter of about 1 nm.

## Claims

1. A process for producing a resin loaded with a hydrous oxide of an amphoteric metal ion; said process comprising steps of:
(a) mixing the resin with at least two bed volumes of an aqueous solution containing a salt of said amphoteric metal ion, and having a metal ion concentration of at least 5%;
(b) draining excess liquid from the resin;
(c) adding at least 0.3 bed volumes of an aqueous alkali metal hydroxide solution having an alkali metal hydroxide concentration of at least 3%, while monitoring pH, at a rate sufficient to raise liquid-phase pH above 4 within 20 minutes;
(d) mixing while adding additional aqueous alkali metal hydroxide solution to maintain liquid-phase pH between 4 and 12; and
(e) draining excess liquid from the resin.

2. The process of claim 1 in which the amphoteric metal ion is Fe(III).

3. The process of claim 2 further comprising adding a bicarbonate or carbonate salt in an amount from 0.12 g/g dry resin to 0.75 g/g dry resin after step (d), and wherein the amount of alkali metal hydroxide is from 0.12 g/g dry resin to 0.75 g/g dry resin.

4. The process of claim 3 in which said at least two bed volumes of an aqueous solution containing a salt of said amphoteric metal ion are added in at least two portions, and excess liquid is drained between portions.

5. The process of claim 4 in which the resin is an ion exchange resin.

6. The process of claim 5 in which the ion exchange resin is an acrylic resin which comprises an amine substituent of structure
R¹N{(CH₂)ₓN(R²)}_{z}(CH₂)_{y}NR³R⁴
where an amine nitrogen bearing substituent R¹ is attached to the resin via an amide bond with an acrylic carbonyl group or via a C-N bond to a CH₂ group on the acrylic gel; R¹ and R²=H, methyl or ethyl; x and y =1-4, z = 0-2 and R³ and R⁴ = methyl, ethyl, propyl or butyl.

7. The process of claim 6 in which the amine nitrogen bearing substituent R¹ is attached via an amide bond with an acrylic carbonyl group; R¹ = H; z = 0; y=3; R³ and R⁴ = methyl; and the acrylic resin is an acrylic gel which is a copolymer of methyl acrylate and divinylbenzene with 2-5% divinylbenzene residues.

8. The process of claim 7 further comprising at least one additional step of mixing the resin with an additional portion of an aqueous solution containing a salt of said amphoteric metal ion and draining excess liquid from the resin.

9. A resin comprising 10% to 35% of an amphoteric metal ion which is present as a hydrous oxide; wherein at least 50% of said metal ion is located in an outer half of a resin bead volume.

10. The resin of claim 9 which is an acrylic ion exchange resin which comprises an amine substituent of structure
R¹N{(CH₂)ₓN(R²)}_{z}(CH₂)_{y}NR³R⁴
where an amine nitrogen bearing substituent R¹ is attached via an amide bond with an acrylic carbonyl group or via a C-N bond to a CH₂ group on the acrylic gel; R¹ and R²=H, methyl or ethyl; x and y =1-4, z = 0-2; R³ and R⁴ = methyl, ethyl, propyl or butyl; and the resin contains 12% to 25% of an amphoteric metal ion which is present as a hydrous oxide; and the amphoteric metal ion is Fe(III).
